# EUROPEAN PATENT APPLICATION

(11) **EP 1 284 117 A1**
(43) Date of publication of application: **19.02.2003**
(21) Application number: 02078162.1
(22) Date of filing: 01.08.2002
(51) Int. Cl.: A47J 31/54

(54) **Heating unit for coffee machines**

(30) Priority: 06.08.2001 CH 20011444
(71) Applicant: Mose' Anstalt, 9490 Vaduz (LI)
(72) Inventor: Nicoli, Alberto, 33170 Pordenone (IT)
(74) Representative: Coppo, Alessandro

(57) **Abstract**

The invention concerns a heating unit for coffee machines, suitable for the generation of hot water and steam, with very compact dimensions and a high energy yield.

This device is characterised in that it comprises a heating element (2), inserted in a metal body (1), surrounded by a jacket (4) and a groove (3) which forms the path for the water corresponding to the body/jacket (1,4) interface.

## Description

The present invention concerns a heating unit for coffee machines, suitable for the generation of hot water and steam, with very compact dimensions and a high energy yield.

In said heating unit the water is conveyed through a helical pipe which is laid around a body, preferably a cylindrical one, in order to maximise the quantity of heat exchange and to minimise heat loss.

A characteristic of the innovation is the particular configuration of the different parts, such as to ensure greater utility of the device, which is more efficient and more compact than those of the prior art.

Generally the heat exchangers used in coffee machines are of two types.

Those of the first type include a tank, composed of two half-shells, in which water is constantly present and is kept at working temperature by an armoured heating element inserted in said tank, the temperature being controlled by a thermostat regulated according to whether hot water or steam is to be produced.

Those of the second type, used on the most recent machines, comprise a metal block, of various shapes in which one or more heating elements are inserted, a channel being created in said block for the water which offers a very large exchange surface. The water comes into the channel cold and comes out hot or in the form of steam, after having been heated by the element.

Devices of this type can produce both hot water and steam, depending on the power of the heating element used.

Said, systems, though simple to make, present various inconvenient aspects. The device with the tank always full of hot water is voluminous, it takes time to reach the working temperature and, though insulated, causes a considerable heat loss. Moreover said device is not convenient for producing steam.

The devices in the form of a block are smaller and more compact and are suitable for producing both hot water and steam, depending on the power of the heating element used.

Said blocks are mostly flat in shape and present a zigzag channel on one of the two flat parts, while the heating element is located on the opposite part.

Said zigzag channel forms a winding path which inevitably causes heat losses with consequent reduction in flow rate, while the heating elements, located on the opposite part, have the effect of radiating heat even on the side away from the water path, with a consequent heat loss.

These devices, moreover, are intended to be placed at a certain distance from the filter where the coffee powder is situated, and are connected to the filter by special channels, with further heat losses.

The innovation solves the problem of heat loss and load loss in the pipes by means of a device in which the heating element is completely surrounded by the water to be heated, so in practice all the heat produced by the element is directed towards the water, and the path of said water inside the device is substantially without sudden changes in direction. Moreover the device according to the invention is very compact and is suitable for producing both hot water and steam.

The innovation will now be described in detail with reference to the single enclosed figure, which shows a section of the device with a plane passing through the longitudinal axis.

The device according to the invention comprises a substantially cylindrical metal body (1) inside which is a hole coaxial with said cylinder, in which is inserted a heating element (2).

On the external surface of said cylinder (1) there is a helical groove (3) which, as said cylinder (1) is inserted in a cylindrical jacket (4), constitutes the path for the water.

Said path (3) is in communication with the outside through an input (5) and an output (6).

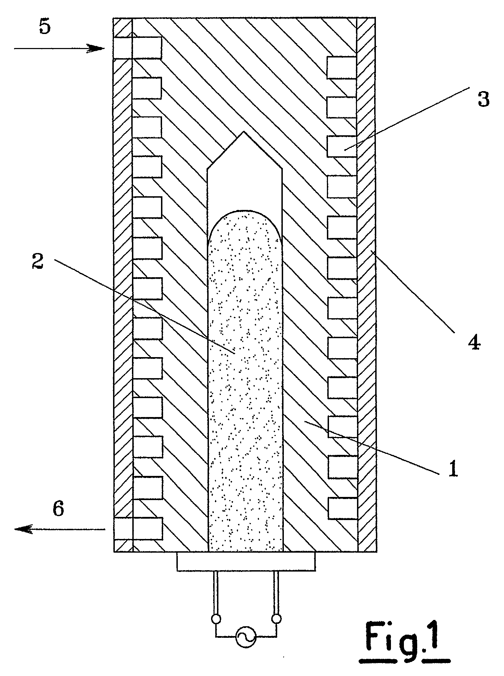

The device is then inserted in an insulating casing not shown in the figure.

As a totally equivalent embodiment, the groove (3) may be made on the internal surface of the jacket (4), which must therefore have a sufficient thickness.

To assess the advantages of the invention, it may be compared with the various types of the prior art.

In comparison with the devices in which the tank is always full of the water, the advantages of the device according to the invention are:
- it is much more compact,
- it is suitable for producing either steam or hot water, depending on the power of the heating element used,
- it does not require a long time to reach working temperature, as it is sufficient for the metal block that contains it to reach said working temperature and not a large mass of water,
- it has a better thermal yield because, thanks to its small dimensions, the surface affected by heat loss is very small.

In comparison with block devices, the advantages of the device according to the invention are:
- it has a better thermal yield because the heating element is completely surrounded by water, so there are no heat losses through walls through which water does not pass;
- the path of the water is less winding and so there are less load losses.

In conclusion, as may be clearly seen from the description supplied, the device according to the invention, thanks to the particular configuration of its parts, is very compact and reaches particular efficiency, since the heat losses are drastically reduced.

The dimensions, like the materials used, may of course vary depending on the user requirements.

## Claims

1. Device for the production of hot water and steam for use in coffee machines, **characterised in that** it comprises a heating element (2), inserted in a metal body (1), surrounded by a jacket (4), and a groove (3) corresponding to the body/jacket interface.

2. Device according to the previous claim, **characterised in that** said groove (3) is created on the external surface of said metal body (1).

3. Device according to claim 1, **characterised in that** said groove (3) is created on the internal surface of said jacket (4).

4. Device according to claim 1, **characterised in that** said groove (3) is helical.

5. Device according to claim 1, **characterised in that** said metal body (1) is a cylinder.

6. Device according to the previous claims, **characterised in that** the path of the water, formed by the groove (3), is contained between said metal body (1) and said jacket (4).
